# FASCICULE DE BREVET EUROPEEN

(11) **EP 3 233 970 B1**
(45) Date de publication et mention de la délivrance du brevet: **16.03.2022**
(21) Numéro de dépôt: 15817244.5
(22) Date de dépôt: 17.12.2015
(51) Int. Cl.: C08G 73/10

(54) **PROCEDE DE FABRICATION DE POLYIMIDES AROMATIQUES**
HERSTELLUNGSVERFAHREN VON AROMATISCHEN POLYIMIDEN
METHOD FOR MANUFACTURING AROMATIC POLYIMIDES

(30) Priorité: 18.12.2014 EP 14307086
(43) Date de publication de la demande: 25.10.2017
(73) Titulaire: Rhodia Operations, 93300 Aubervilliers (FR); Institut National des Sciences Appliquées de Lyon, 69621 Villeurbanne Cedex (FR); Centre National de la Recherche Scientifique, 75016 Paris (FR); Université Claude Bernard Lyon 1, 69100 Villeurbanne (FR); Université Jean Monnet Saint-Etienne, 42023 Saint Etienne Cedex 2 (FR)
(72) Inventeur: JEOL, Stéphane, Cumming, Georgia 30041 (US); ROSSIN, René, 69340 Francheville (FR); MOLLET, Vincent, 69540 Irigny (FR); PACI, Benjamin, 57140 Woippy (FR); FENOUILLOT-RIMLINGER, Françoise, 38080 L'Isle d'Abeau (FR); ROUSSEAU, Alain, 69500 Bron (FR)
(74) Mandataire: Lederer & Keller Patentanwälte Partnerschaft mbB
(86) Numéro de dépôt international: PCT/EP2015/080377
(87) Numéro de publication internationale: WO 2016/097232

(56) Documents cités:
- WO-A1-2013/041532
- JP-A- 2012 092 262

## Description

La présente invention concerne des polyimides thermoplastiques aromatiques et leur préparation.

Plus précisément, l'invention concerne un procédé de fabrication de polyimides thermoplastiques par polymérisation à l'état solide d'un ou plusieurs sel(s) solide(s) sec(s) de carboxylate d'ammonium formé(s) à partir d'une ou plusieurs diamine(s) et d'un ou plusieurs acide(s) tétracarboxylique(s) aromatique(s).

Les polyimides, et notamment les polyimides aromatiques, sont connus pour leurs propriétés thermiques et/ou mécaniques remarquables, ce qui les destine en particulier à des applications hautes performances dans différents domaines tel que l'aéronautique ou encore l'électronique (cartes de circuits imprimés par exemple).

Néanmoins, ces polyimides aromatiques sont considérés comme thermodurs et infusibles et nécessitent l'utilisation de procédés de synthèse en solution dans des solvants toxiques, notamment cancérigènes ou potentiellement cancérigènes pour certains, et/ou non amicaux pour l'environnement à partir de diamines aromatiques et de dianhydrides aromatiques. Le procédé de synthèse des polyimides le plus connu et répandu est un procédé en deux étapes qui consiste à faire réagir dans une première étape dans un solvant, comme le diméthyle acétamide, les crésols ou encore dans la N-méthylpyrrolidone, un dianhydride aromatique avec une diamine aromatique pour former un intermédiaire appelé polyacide amique, qui est ensuite transformé en polyimide dans une seconde étape par élévation de la température ou par une déshydratation chimique.

Lors de la première étape, les amines ouvrent les cycles anhydride et donnent lieu à une fonction amide acide appelée souvent acide amique. Le polyacide amique formé est soluble dans le solvant de synthèse et est transformé par cyclisation en polyimide qui le plus souvent est insoluble. Par exemple, pour faire un film en polyimide, on verse une solution de poly(acide amique) sur une surface chauffante. Lors du chauffage de la surface chauffante, le solvant s'évapore et la cyclisation se fait on obtient alors un film de polyimide. WO 2013/041532 concerne des copolyimides thermoplastiques, semiaromatiques et semi-cristallins obtenus par polymérisation d'au moins: (a) un compose aromatique comprenant 2 fonctions anhydride et/ou ses derives acide carboxylique et/ou ester; (b) une diamine de formule (I) NH2-R-NH2 dans lequel R est un radical divalent hydrocarbone et aliphatique et comprenant éventuellement des heteroatomes, les deux fonctions amines sont separees par un nombre d'atomes de carbone X; X étant compris entre 4 et 12; et (c) une diamine de formule (II) NH2-R'-NH2 dans lequel R' est un radical divalent hydrocarbone et aliphatique et comprenant éventuellement des heteroatomes, les deux fonctions amines sont separees par un nombre d'atomes de carbone Y; Y etant compris entre 10 et 20; étant entendu que la diamine (b) est différente de la diamine (c).

Pour rendre les polyimides aromatiques fusibles, donc transformables, par les techniques d'extrusion ou d'injection notamment, il est connu d'utiliser des diamines aromatiques plus flexibles donnant lieu à des polyimides amorphes de température de transition vitreuse Tg proche de 200°C connus sous le nom de polyétherimide dont Ultem est un nom commercial. Des procédés développés consistent à réaliser la polymérisation à l'état fondu entre 275 et 290°C comme dans le brevet US3833546 à partir d'un mélange direct de dianhydride aromatique et de diamine aromatique ou d'acide tétracarboxylique aromatique et de diamine aromatique. Dans ce cas, le contrôle de la stœchiométrie des réactifs n'est pas optimal, des réactions de dégradation rapides ont lieu. Un inconvénient est que lorsque la température d'utilisation est supérieure à la température de transition vitreuse Tg du polyimide, le polyimide perd sa tenue mécanique en raison de son caractère amorphe. Enfin, en tant que polymère amorphe, les propriétés mécaniques dépendent principalement de la masse molaire qui doit être supérieure à la masse molaire entre enchevêtrements pour ces polymères, cela implique d'avoir des masses molaires non négligeables, ce qui s'accompagne d'une viscosité importante à l'état fondu. Ces polyimides aromatiques flexibles sont malgré tout considérés comme des thermoplastiques.

Les polyimides semi-aromatiques constituent également une approche intéressante car ils peuvent être semi-cristallins et avoir des températures de fusion compatibles avec les températures de transformation des thermoplastiques, une température de fusion généralement inférieure à 330°C, et donc être transformables par les procédés de mise en œuvre connus pour les thermoplastiques, similaires à des polyamides, tout en bénéficiant d'une excellente tenue en température.

Il existe différentes méthodes de synthèse, à commencer par la synthèse en solution comme décrite pour les polyimides aromatiques. Un exemple de synthèse en solution de polyimide est décrite par Cor Koning dans la revue Polymer 1998, volume 39, 16, pages 3697-3702. Les auteurs synthétisent des polyimides en solution à partir de dianhydride 3,3'-4,4'-biphényletétracarboxylique et de diamines aliphatiques contenant entre 4 et 10 groupes méthylènes. Les polyimides obtenus possèdent des températures de fusion inférieures à 330°C. Des polymérisations à l'état fondu sont décrites dans le brevet US2710853 ou US2867609 à partir de diamine aliphatique et d'anhydride pyromellitique ou de dérivés diester diacide d'anhydride pyromellitique selon des procédés connus de synthèse de polyamides. L'inconvénient majeur de cette technique est qu'elle nécessite de choisir une température de synthèse supérieure à la température de fusion du polyimide formé pendant des temps longs, ce qui engendre des dégradations thermiques significatives et importantes.

Pour remédier à ce problème, une équipe japonaise (Inoue et al dans Macromolecules 1997, 30, 1921 -1928 "High Pressure Synthesis of Aliphatic-Aromatic Polyimides via Nylon-Salt-Type Monomers derived from aliphatic diamines and pyromellitic acid and biphenyltetracarboxylic acid") a identifié une méthode de polymérisation de sel d'acide tétracarboxylique aromatique et de diamines aliphatiques à l'état solide. Les auteurs préparent ainsi un sel qui est pressé sous des pressions de plusieurs centaines de bar pour donner lieu à des objets tels des disques, et chauffent ensuite les disques formés à une température donnée sous différentes pressions. Lors du chauffage, la réaction se produit et génère de l'eau, ce qui montre que la réaction a eu lieu et se ferait très rapidement.

Le problème des procédés envisagés par ces auteurs réside dans le fait qu'il est nécessaire d'extraire l'eau de réaction formée lors de la mise en forme, ce qui peut engendrer des défauts dans les pièces, des temps longs de transformation engendrant des coûts de transformation excessifs et/ou peuvent donner des pièces de qualité non optimale avec des problèmes de porosité et d'aspect de surface, ou encore nécessiter d'adapter et/ou de changer les équipements destinés à l'utilisation de polymères non réactifs.

En outre, les procédés existants peuvent se révéler insatisfaisants en termes de contrôle de la masse molaire et/ou de la viscosité du polyimide. Or, le contrôle de ces paramètres est particulièrement important, en particulier en fonction des applications auxquelles ces polymères sont destinés.

Par ailleurs, il existe des applications pour lesquelles il est nécessaire que les polymères se présentent sous la forme de poudres. C'est le cas notamment du frittage laser ou des procédés de fabrication de composites à fibres continues à partir de poudres par poudrage d'étoffes ou pultrusion de monofil de verre ou de carbone, ou encore d'autres procédés. Les technologies de production de poudres de polymères connues nécessitent soit de dissoudre un polymère dans un solvant puis de le précipiter dans un non solvant ; mais ceci implique l'utilisation de solvants toxiques et cancérigènes, soit de mélanger à l'état fondu le polymère avec une espèce non miscible de façon à générer une ségrégation du polymère souhaitée, soit de broyer des granulés de polymères formulés ce qui impose des étapes de micronisation et de séchages supplémentaires. Quel que soit le cas cité, les procédés sont complexes et coûteux.

De plus, les polyimides obtenus par les procédés de l'art antérieur, notamment par voie solide et/ou diesters, peuvent présenter une viscosité relative et/ou une masse molaire non satisfaisantes, ainsi qu'une variation trop importante de leur viscosité relative et/ou de leur masse molaire avant et après fusion de celui-ci.

Afin de faire face à ces différents problèmes, un procédé amélioré d'obtention de particules solides de polyimides semi-aromatiques et semi-cristallins a été décrit dans la demande de brevet WO 2013/041528. Il s'agit tout d'abord de faire réagir au moins une diamine avec au moins un acide tétracarboxylique aromatique afin d'obtenir un sel. Cette première étape peut être effectuée en présence d'un limiteur de chaînes et/ou d'un excès d'un des monomères. Une polymérisation à l'état solide du sel est alors réalisée à une température supérieure à la température de transition vitreuse Tg du polyimide à obtenir tout en restant inférieure à la température de fusion du sel obtenu lors de la première étape. La masse molaire des particules solides de polyimides obtenues est notamment contrôlée par la quantité de limiteur de chaînes et/ou d'excès d'un des monomères introduite au cours de la première étape.

La Demanderesse s'est aperçue que cette méthode de synthèse n'était pas totalement satisfaisante et qu'il était possible de préparer de manière encore plus efficace des particules solides de polyimides aromatiques et semi-cristallins. En effet, un contrôle plus fin de la masse molaire et de la viscosité des polyimides peut être obtenu par un procédé particulièrement amélioré.

Le contrôle de la masse molaire et de la viscosité des polyimides obtenus revêt une très grande importance. Il est en effet nécessaire d'en avoir un contrôle qui soit le plus précis possible.

La présente invention a pour objet de proposer une solution permettant de résoudre l'ensemble des problèmes mentionnés ci-dessus.

Le procédé de fabrication de polyimides aromatiques selon l'invention comprend les étapes suivantes :
(a) préparation d'un ou plusieurs sel(s) solide(s) en faisant réagir un ou plusieurs acide(s) tétracarboxylique(s) aromatique(s) et une ou plusieurs diamine(s) selon un rapport molaire allant de 0,95 à 1,05 ;
(b) séchage du ou des sel(s) solide(s) ;
(c) ajout au sel sec issu de l'étape (b) d'un ou plusieurs composé(s) (C) choisis parmi l'acide pyromellitique, l'acide phtalique et leurs mélanges;
(d) polymérisation à l'état solide du ou desdits sel(s) solide(s) en présence du ou des composé(s) (C).

Dans le procédé selon l'invention, ce n'est qu'une fois le sel solide sec obtenu qu'un composé (C) particulier tel que défini ci-avant, est ajouté.

Le procédé selon l'invention permet de préparer de manière industrielle, efficace et robuste des polyimides aromatiques pour diverses applications. Les polyimides obtenus sont des thermoplastiques semi-cristallins et ont comme propriété de ne pas libérer ou absorber de l'eau lors des étapes ultérieures de transformation comme par exemple la pultrusion, l'extrusion, ou le moulage par injection. Ils peuvent être notamment obtenus sous forme de poudre de granulométries contrôlées.

Le procédé selon l'invention permet de contrôler de manière particulièrement efficace la masse molaire et la viscosité des polyimides obtenus.

On peut notamment utiliser ces poudres pour la réalisation d'articles composites, pour la production d'articles par frittage laser, pour le revêtement, ou dans le domaine de la cosmétique.

En outre, la polymérisation à l'état solide permet d'éviter l'utilisation de solvants cancérigènes ou néfastes pour l'environnement.

Un autre avantage du procédé selon l'invention est la faculté d'effectuer une polymérisation à une température relativement faible permettant d'éviter des dégradations thermiques du sel et du polyimide formé.

D'autres avantages et caractéristiques de l'invention apparaitront plus clairement à l'examen de la description détaillée ci-après.

Le polyimide obtenu par le procédé selon l'invention est thermoplastique et semi-cristallin. De manière préférée, il présente une température de fusion Tf allant de 50 à 350°C.

La détermination de la température de fusion du polyimide est préférentiellement effectuée au pic de l'endotherme de fusion mesurée par calorimétrie différentielle à balayage (DSC « Differential Scanning Calorimetry »), à l'aide d'un appareil Perkin Elmer Pyris 1, en chauffant le polyimide à partir de 20°C à une vitesse de 10°C/min.

On entend par polyimide semi-cristallin, un polyimide présentant une phase amorphe et une phase cristalline, ayant par exemple un taux de cristallinité compris entre 1 et 85%.

Les polyimides obtenus par le procédé selon la présente invention présentent préférentiellement une température de transition vitreuse Tg inférieure ou égale à 200°C, plus préférentiellement inférieure ou égale à 150°C.

On entend par polyimide thermoplastique, un polyimide présentant une température au-delà de laquelle la matière se ramollit et fond et qui, au-dessous de celle-ci, devient dure.

Le polyimide obtenu par le procédé selon l'invention peut présenter une masse molaire moyenne en nombre sensiblement stable, en particulier comparée avant et après fusion du polyimide, en particulier après 10 minutes à l'état fondu, plus particulièrement après 20 minutes à l'état fondu, voire après 40 minutes à l'état fondu. Par « sensiblement stable », on peut entendre une variation inférieure ou égale à 10 %.

Ledit polyimide peut présenter une viscosité relative stable. En particulier, il peut présenter, après 40 minutes à une température égale à Tf+15°C, soit une température supérieure de 15°C à la température de fusion du polyimide, une variation de sa viscosité relative inférieure ou égale à 10 %. Ceci peut être mesuré de la manière décrite dans les exemples.

La présente invention concerne la fabrication de polyimides aromatiques à partir d'un ou plusieurs acide(s) tétracarboxylique(s) aromatique(s) et une ou plusieurs diamine(s). Les polymères obtenus à partir d'une seule diamine et d'un seul acide tétracarboxylique sont des polyimides, généralement appelés homopolyimides. La réaction entre au moins 3 monomères différents produit un polyimide, généralement appelé copolyimide, tout particulièrement deux diamines et un acide tétracarboxylique ou une diamine et deux acides tétracarboxyliques. Les polyimides peuvent être définis par la composition molaire en chaque monomère constitutif.

L'étape (a) selon l'invention consiste à préparer un ou plusieurs sel(s) solide(s) en faisant réagir un ou plusieurs acide(s) tétracarboxylique(s) aromatique(s) et une ou plusieurs diamine(s) selon un rapport molaire allant de 0,95 à 1,05.

Le sel ainsi préparé est un sel dans lequel les entités diamines et acides tétracarboxyliques sont liés uniquement par des interactions polaires, en particulier du type -COO⁻ H₃⁺N-, et non par liaison(s) covalente(s). Plus particulièrement le sel comprend un acide tétracarboxylique aromatique et une diamine, lesquels ne sont pas liés par liaison covalente. En particulier, le sel peut présenter la structure suivante, avec Ar représentant un groupement aromatique :

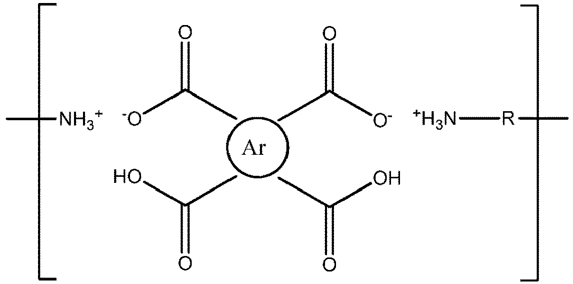

Les acides tétracarboxyliques aromatiques employés dans l'étape (a) du procédé selon l'invention présentent préférentiellement des fonctions acides carboxyliques dans des positions telles qu'elles permettent généralement de former deux fonctions anhydrides d'acides sur une même molécule par une réaction de déshydratation. Les acides tétracarboxyliques aromatiques de la présente invention présentent généralement deux paires de fonctions acides carboxyliques, chaque paire de fonctions étant liée à un atome de carbone adjacent, en α et β. Les fonctions acides tétracarboxyliques peuvent être obtenues à partir de dianhydrides d'acides par hydrolyse des fonctions anhydrides. Des exemples de dianhydrides d'acides aromatiques et d'acides tétracarboxyliques aromatiques, dérivés des dianhydrides, sont décrits dans le brevet US7932012.

Les acides tétracarboxyliques aromatiques de l'invention peuvent également porter des groupes fonctionnels, notamment le groupe -SO₃X, avec X=H ou un cation, tels que Na, Li, Zn, Ag, Ca, Al, K et Mg.

Avantageusement, les acides tétracarboxyliques aromatiques sont choisis parmi l'acide pyromellitique, l'acide 3,3',4,4'-biphényltétracarboxylique, l'acide 2,3,3',4'-biphényltétracarboxylique, l'acide 2,2',3,3'-biphényltétracarboxylique, l'acide 3,3',4,4'-benzophénonetétracarboxylique, l'acide 2,2',3,3'-benzophénonetétracarboxylique, l'acide 1,2,5,6-naphthalènetétracarboxylique, l'acide 2,3,6,7-naphthalènetétracarboxylique, l'acide 2,3,5,6-pyridinetétracarboxylique, l'acide 3,4,9,10-perylènetétracarboxylique, l'acide 3,3',4,4'-tétraphénylsilanetétracarboxylique, et l'acide 2,2'-bis-(3,4-bicarboxyphenyl)hexafluoropropane tétracarboxylique.

De manière préférée, les diamines de l'invention sont des molécules de formule H₂N-R-NH₂ avec un radical R divalent hydrocarboné aliphatique, saturé ou insaturé, linéaire ou branché, cycloaliphatique ou aromatique, comprenant éventuellement un ou plusieurs hétéroatomes.

Avantageusement, le radical R comprend de 2 à 50 atomes de carbone, préférentiellement de 6 à 36 atomes de carbone. Le radical R peut éventuellement contenir un ou plusieurs hétéroatomes, tel que O, N, P ou S. Le radical R peut comprendre un ou plusieurs groupes fonctionnels comme des fonctions hydroxyles, sulfones, cétones, éthers ou autres.

De préférence, les fonctions amines sont des amines primaires.

Selon un premier mode de réalisation, les diamines de l'invention sont choisies parmi les diamines aliphatiques.

Les diamines peuvent notamment être des diamines en positions α,ω contenant de 15 à 20 groupes méthylènes.

De préférence, les diamines aliphatiques sont choisies parmi le 1,2-diaminoéthane, le 1,3-diaminopropane, le 1,4-diaminobutane, le 1,5-diaminopentane, le 2-méthyl-1,5-diaminopentane, l'hexaméthylène diamine, la 3-méthyl-hexaméthylène diamine, la 2,5-diméthyl-hexaméthylène diamine, la 2,2,4- et 2,4,4-triméthyl-hexaméthylène diamine, le 1,7-diaminoheptane, le 1,8- diaminooctane, la 2,2,7,7-tétraméthyl-octaméthylène diamine, le 1,9- diaminonane, la 5-méthyl-1 ,9-diaminononane, le 1,10-diaminodécane, le 1,11-diaminoundécane, le 1,12-diaminododécane, le 1,13-diaminotridécane et le 1,14-diaminotétradécane.

Selon un mode de réalisation particulier de l'invention, les diamines sont choisies parmi les diamines cycloaliphatiques, et de préférence parmi l'isophorone diamine, le 1,3-diaminocyclohexane, le 1,4-diaminocyclohexane, le diaminodicyclohexyl-méthane, le 1,3-bis(aminométhyle)cyclohexane, la 4,4'-méthylènebis(cyclohexylamine) et la 4,4'-methylènebis(2-methylcyclohexylamine).

On peut également citer des exemples de diamines contenant des hétéroatomes comme les polyétherdiamines telles que les Jeffamine^{®} et Elastamine^{®} commercialisées par Hunstman. Il existe une variété de polyéther, composés de motifs oxyde d'éthylène, oxyde de propylène ou oxyde de tétraméthylène.

Selon un second mode de réalisation, les diamines de l'invention sont choisies parmi les diamines aromatiques.

De préférence, les diamines aromatiques sont des diamines aromatiques comportant de 6 à 24 atomes de carbone, plus préférentiellement de 6 à 18 atomes de carbone et encore plus préférentiellement de 6 à 10 atomes de carbone, comme par exemple la m-xylylènediamine (MXDA).

De préférence, l'aromaticité des diamines aromatiques résulte de la présence des groupements m-phénylène et/ou o-phénylène, selon un nombre total desdits groupements allant de 1 à 2.

Avantageusement, les diamines aromatiques sont choisies parmi la m-phénylènediamine (MPD), la p-phénylènediamine (PPD), le 3,4'-diaminodiphényléther (3,4'-ODA), le 4,4'-diaminodiphényléther (4,4'-ODA), la m-xylylènediamine (MXDA), comme illustrées ci-dessous : 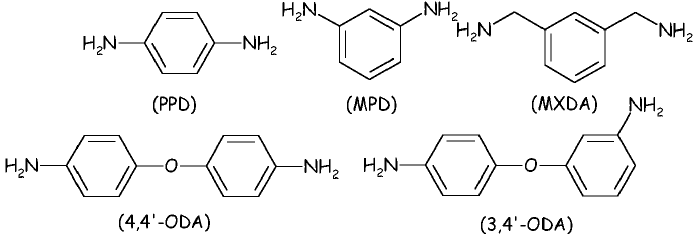 et la p-xylylènediamine (PXDA, non représentée).

Une diamine aromatique particulièrement préférée est la m-xylylènediamine (MXDA).

Lors de l'étape (a) du procédé, un ou plusieurs sel(s) solide(s) sont préparés en faisant réagir un ou plusieurs acide(s) tétracarboxylique(s) aromatique(s) et une ou plusieurs diamine(s) selon un rapport molaire allant de 0,95 à 1,05. Cela signifie que le ratio entre la quantité en moles d'acide(s) tétracarboxylique(s) aromatique(s) d'une part et la quantité en moles de diamine(s) d'autre part va de 0,95 à 1,05.

Avantageusement, le ou les sel(s) solide(s) sont préparés en faisant réagir un ou plusieurs acide(s) tétracarboxylique(s) aromatique(s) et une ou plusieurs diamine(s) selon un rapport molaire allant de 0,99 à 1,01

Selon un mode de réalisation particulier, le ou les sel(s) solide(s) sont préparés en faisant réagir en quantité stœchiométrique un ou plusieurs acide(s) tétracarboxylique(s) aromatique(s) et une ou plusieurs diamine(s).

Par quantité stœchiométrique, on entend de manière connue en soi que le ou les acide(s) tétracarboxylique(s) aromatique(s) et la ou les diamine(s) sont ajoutés selon un ratio molaire strict de 1.

Un tel sel peut être synthétisé de diverses manières, connues de l'homme du métier.

On peut par exemple procéder à une addition d'une diamine dans une solution comprenant l'acide tétracarboxylique aromatique. On peut également dissoudre l'acide tétracarboxylique aromatique dans un solvant tel que de l'alcool, comme l'éthanol ou du méthanol par exemple, et faire de même pour la diamine. Ces deux solutions sont alors mélangées sous agitation. Le sel formé peut être insoluble dans le solvant utilisé et ainsi précipiter.

On peut également réaliser une solution de sel formé à partir d'une diamine et d'un acide tétracarboxylique aromatique, puis la concentrer à chaud et ensuite la refroidir. Le sel cristallise alors et les cristaux sont récupérés et séchés. La concentration de la solution peut être obtenue par évaporation du solvant comme l'eau ou l'alcool ou selon un autre procédé par addition d'acide tétracarboxylique aromatique et/ou de diamine. On peut également procéder à une saturation de la solution, c'est-à-dire effectuer un procédé qui permet de modifier la concentration du sel dans la solution à une valeur compatible avec une cristallisation de celui-ci. Généralement cette concentration est au moins égale et plus préférentiellement supérieure à la concentration de saturation du sel à la température considérée. Plus précisément, cette concentration correspond à une sursaturation de la solution du sel. On peut également travailler à une pression permettant d'évaporer le solvant de la solution, tel que l'eau ou l'alcool, pour saturer la solution et provoquer la cristallisation. On peut aussi saturer la solution par addition successive ou simultanée d'un flux d'acide tétracarboxylique aromatique et d'un flux de diamine dans une solution de sel.

A titre d'exemple, on dissout l'acide tétracarboxylique aromatique dans de l'alcool, comme l'éthanol par exemple, dans un premier milieu. On dissout la diamine dans de l'alcool dans un autre milieu et on mélange ensuite les deux milieux sous agitation. Le sel obtenu précipite.

A la fin de cette synthèse, le sel issu de l'étape (a) est récupéré et séché de telle sorte qu'une poudre sèche est obtenue.

On peut récupérer le sel par filtration dans le cas d'un précipitât et désagréger le gâteau de filtration si nécessaire.

Dans le cas où le sel est dissout en solution, on peut le récupérer par un procédé de cristallisation par concentration, sursaturation ou en le faisant précipiter par addition d'un non solvant. Le sel cristallisé peut alors être récupéré par filtration et le gâteau de filtration peut être désagrégé si nécessaire.

Le séchage du sel est de préférence effectué sous vide ou sous balayage d'un gaz inerte tel que l'azote à une température allant jusqu'à 150°C.

Un autre procédé permettant de récupérer des particules dispersées de sel sec est l'atomisation de la solution, c'est-à-dire notamment une opération d'évaporation soudaine du solvant pulvérisé sous forme de fines gouttelettes afin de récupérer les particules dispersées de sel.

II est enfin possible de cribler la dimension des particules de sel, par exemple par tamisage ou broyage.

Lors de l'étape (c), un ou plusieurs composé(s) (C), sont ajoutés au sel sec issu de l'étape (b).

Le ou les composé(s) (C) ajouté(s) à l'étape (c) permettent de contrôler les longueurs de chaîne du polyimide et jouent ainsi le rôle de limiteur de chaîne.

Le(s) composé(s) (C) sont choisis parmi l'acide pyromellitique, l'acide phtalique et leurs mélanges.

La quantité de composé (C) introduit à l'étape (c) est avantageusement supérieure à 0,5% en nombre de moles par rapport au nombre total de moles de réactifs, c'est-à-dire au nombre total de moles d'acide tétracarboxylique aromatique et de diamine employés à l'étape (a) du procédé selon l'invention. De préférence, la quantité en composé (C) introduit à l'étape (c) va de 0,5 à 10% en nombre de moles, plus préférentiellement de 1 à 5% en nombre de moles, par rapport au nombre total de moles de réactifs.

En outre, on peut utiliser des catalyseurs, ajoutés à n'importe quel moment du procédé, tel que par exemple en mélange avec la diamine et/ou l'acide tétracarboxylique aromatique, en mélange au sel formé, soit en solution, soit par imprégnation du sel à l'état solide.

Lors de l'étape (d) du procédé selon l'invention, une polymérisation à l'état solide du ou des sel(s) solide(s) sec(s) issu(s) de l'étape (b) en présence du ou des composé(s) (C) est effectuée pour obtenir le polyimide.

Par « polymérisation à l'état solide », on entend au sens de la présente invention une polymérisation qui n'est pas effectuée en solution ou en suspension dans un solvant, ni à l'état fondu.

Selon un mode de réalisation préférée de l'invention, la polymérisation est effectuée à une température T obéissant à la relation suivante : Tf du sel de l'étape (a) > T > Tg du polyimide à obtenir.

La Tf du sel issu de l'étape (a) désigne la température de fusion dudit sel.

La détermination de la température de fusion du sel est préférentiellement effectuée par la mesure de la température de fin de l'endotherme mesurée par calorimétrie différentielle à balayage (DSC « Differential Scanning Calorimetry »), à l'aide d'un appareil Perkin Elmer Pyris 1, en chauffant le sel à partir de 20°C à une vitesse de 10°C/min.

Avantageusement, la polymérisation est effectuée à une pression absolue allant de 0,005 à 1 MPa, et plus préférentiellement allant de 0,005 MPa à 0,2 MPa

La polymérisation est effectuée préférentiellement à une température allant de 50°C à 250°C.

Le procédé de polymérisation à l'état solide peut être réalisé selon les procédés classiques connus de l'homme du métier. Le principe fondamental de ces procédés consiste à porter le sel solide sec issu de l'étape (b) en présence du ou des composé(s) (C) sous air ou dans une atmosphère inerte ou sous vide, à une température inférieure au point de fusion du sel mais suffisante pour permettre la réaction de polymérisation, généralement supérieure à la température de transition vitreuse du polyimide.

Un tel procédé peut donc comprendre brièvement :
(a) un chauffage du produit par diffusion conductive, convective ou par radiation ;
(b) un inertage par application de vide, balayage par un gaz neutre tel que l'azote, le CO2, ou la vapeur surchauffée, ou application d'une surpression ;
(c) une élimination du sous-produit de condensation par évaporation puis, balayage du gaz vecteur ou concentration de la phase gaz ;
(d) une agitation mécanique ou fluidisation de la phase solide par le gaz vecteur ou vibrations peut être souhaitable afin d'améliorer les transferts thermiques et massiques et également prévenir tout risque d'agglomération du solide divisé.

Préférentiellement, on utilise au cours de l'étape (d) un moyen de maintien en mouvement du polyimide afin d'obtenir celui-ci sous forme de particules, et de prévenir une agrégation de ces particules. On peut utiliser pour ce faire une agitation mécanique, tel qu'un agitateur, une mise en rotation du réacteur, ou une agitation par vibrations, ou une fluidification par un gaz vecteur.

Les polyimides obtenus par le procédé selon l'invention se présentent avantageusement sous forme de particules, dont le diamètre médian D50 va de 0,01 à 2 mm.

On entend par diamètre médian D50, la médiane qui sépare en deux parties d'aires égales la courbe de répartition granulométrique en volume. Les analyses granulométriques peuvent être effectuées au moyen d'un granulomètre à diffraction laser Mastersizer X à banc optique étendu de la Société Malvern Instruments SA permettant de caractériser des tailles de particules comprises entre 2 et 2000 µm. La distribution étant volumique, le diamètre médian correspondra à 50% du volume total des particules. De plus, le diamètre médian donné, correspond au diamètre d'une sphère équivalente, en supposant que tous les objets ont une forme équivalente à une sphère.

De manière préférée, les polyimides obtenus par le procédé selon l'invention sont blancs. Ils présentent notamment une caractéristique colorimétrique CIE b^{∗} inférieure ou égale à 10.

De préférence, la masse molaire moyenne en nombre Mₙ des polyimides selon l'invention va de 500 à 50000 g/mol, plus préférentiellement, de 2000 à 40000 g/mol, encore plus préférentiellement, de 5000 à 30000 g/mol.

Les masses molaires spécifiques dans la présente invention peuvent être déterminées selon de nombreuses méthodes qui sont bien connues en soi de l'homme de l'art.

A titre illustratif de ces méthodes peuvent être citées notamment celle se fondant sur une analyse des groupes terminaux, par exemple détermination par RMN ou titration, ou celle faisant appel à une mesure de chromatographie sur gel perméable (Gel Permeation Chromatography GPC) appelée également chromatographie d'exclusion stérique (SEC). D'une manière générale, le choix du solvant pour réaliser les mesures GPC d'un polyimide se fait d'une manière bien connue en soi en fonction de la structure du polyimide.

De manière préférentielle, pour déterminer les concentrations en groupements terminaux, les mesures RMN d'un polyimide peuvent être réalisées dans l'acide sulfurique deutéré concentré comme solvant.

Le calcul de la distribution de masses ainsi que de la masse moyenne Mn peut être effectué en équivalents polystyrène (PST) ou masse absolue, après calibration par des étalons commerciaux. Si nécessaire, des mesures en masses absolues peuvent être réalisées, par détection viscosimétrique. Dans le cadre de la présente invention, la masse molaire moyenne Mn est exprimée en masse absolue. La masse molaire moyenne Mn peut être calculée à partir de la totalité de la distribution ou après troncature des faibles masses si on ne souhaite pas prendre en compte la contribution des oligomères cycliques.

A la fin de l'étape (d), le polyimide synthétisé par le procédé selon l'invention est récupéré, de préférence sous forme de particules, et peut notamment l'être sans qu'un broyage mécanique supplémentaire ne soit nécessaire. En revanche, il peut être utile de procéder à une désagrégation de particules qui peuvent être agglomérées.

On peut utiliser le polyimide obtenu par le procédé selon l'invention pour préparer des compositions qui sont généralement obtenues par mélange du polyimide avec différents composés, notamment des charges et/ou des additifs. On procède à plus ou moins haute température, à plus ou moins haute force de cisaillement selon la nature des différents composés. Les composés peuvent être introduits simultanément ou successivement. On utilise généralement un dispositif d'extrusion dans lequel la matière est chauffée, puis fondue et soumise à une force de cisaillement, et véhiculée. On peut, selon des modes de réalisations particuliers, effectuer des pré-mélanges, en fondu ou non, avant préparation de la composition finale. On peut par exemple effectuer un prémélange dans une résine, par exemple du polyimide, de façon à réaliser un mélange maître.

On peut obtenir une composition par mélange, en fondu ou non, des polyimides obtenus par le procédé de fabrication tel que décrit précédemment, avec des charges de renfort ou de remplissage et/ou des agents modificateurs du choc et/ou des additifs.

Ladite composition peut éventuellement comprendre un ou plusieurs autres polymères.

Ladite composition peut comprendre entre 20 et 90 % en poids, préférentiellement entre 20 et 70 % en poids, et plus préférentiellement entre 35 et 65% en poids de polyimide selon l'invention, par rapport au poids total de la composition.

Ladite composition peut en outre comprendre des charges de renfort ou de remplissage. Les charges de renfort ou de remplissage sont des charges classiquement utilisées pour la réalisation de compositions thermoplastiques, notamment à base de polyamide. On peut notamment citer les charges fibreuses de renfort, telles que telles que des fibres de verre, des fibres de carbone, ou des fibres organiques, les charges non fibreuses, telles que des charges particulaires, lamellaires et/ou les nanocharges exfoliables ou non exfoliables comme l'alumine, le noir de carbone, les argiles, le phosphate de zirconium, le kaolin, le carbonate de calcium, le cuivre, les diatomées, le graphite, le mica, la silice, le dioxyde de titane, les zéolites, le talc, la wollastonite, les charges polymériques telles que, par exemple, des particules de diméthacrylates, les billes de verre ou de la poudre de verre. On préfère notamment utiliser les fibres de renfort, telles que les fibres de verre.

Ladite composition peut comprendre entre 5 et 60 % en poids de charges de renfort ou de remplissage, préférentiellement entre 10 et 40 % en poids, par rapport au poids total de la composition.

Ladite composition, comprenant le polyimide obtenu par le procédé selon l'invention tel que défini précédemment, peut comprendre au moins un agent modificateur du choc, c'est-à- dire un composé capable de modifier la résistance aux chocs d'une composition polyimide. Ces composés modificateurs du choc comprennent préférentiellement des groupements fonctionnels réactifs avec le polyimide. On entend par groupements fonctionnels réactifs avec le polyimide, des groupements capables de réagir ou d'interagir chimiquement avec les fonctions résiduelles anhydride, acide ou amine du polyimide, notamment par covalence, interaction ionique ou hydrogène ou liaison de van der Waals. De tels groupements réactifs permettent d'assurer une bonne dispersion des agents modificateurs de chocs dans la matrice polyimide. On peut citer par exemple les fonctions anhydrides, époxydes, esters, aminés, acides carboxyliques, les dérivés carboxylates ou sulfonates.

Ladite composition peut en outre comprendre des additifs généralement utilisés pour la fabrication de compositions polyimides ou polyamides. Ainsi, on peut citer les lubrifiants, les agents ignifugeants, les plastifiants, les agents nucléants, les agents anti-UV, les catalyseurs, les antioxydants, les antistatiques, les colorants, les matifiants, les additifs d'aide au moulage ou autres additifs conventionnels.

Les charges, agents de renfort de chocs et/ou additifs peuvent être ajoutés au polyimide par des moyens usuels adaptés biens connus dans le domaine des plastiques techniques, tel que par exemple lors de la salification, après la salification, lors de la polymérisation à l'état solide, ou en mélange en fondu.

Les compositions polyimides sont généralement obtenues par mélange des différents composés entrant dans la composition à froid ou en fondu. On procède à plus ou moins haute température, à plus ou moins haute force de cisaillement selon la nature des différents composés. Les composés peuvent être introduits simultanément ou successivement. On utilise généralement un dispositif d'extrusion dans lequel la matière est chauffée, puis fondue et soumise à une force de cisaillement, et véhiculée.

On peut mélanger tous les composés en phase fondue au cours d'une unique opération, par exemple au cours d'une opération d'extrusion. On peut par exemple procéder à un mélange de granulés ou de poudres des matériaux polymériques, les introduire dans le dispositif d'extrusion afin de les fondre et de les soumettre à un cisaillement plus ou moins important. On peut, selon des modes de réalisations particuliers, effectuer des pré-mélanges, en fondu ou non, de certains des composés avant préparation de la composition finale.

Le polyimide ou les diverses compositions tels que définis précédemment peuvent être utilisés pour tout procédé de mise en forme de fabrication d'articles plastiques.

Des articles plastiques comprenant le polyimide tel que fabriqué par le procédé selon l'invention peuvent être fabriqués. On peut citer à cet effet diverses techniques telles que le procédé de moulage, notamment le moulage par injection, l'extrusion, l'extrusion soufflage, ou encore le rotomoulage, notamment dans le domaine de l'automobile ou de l'électronique et de l'électricité par exemple. Le procédé d'extrusion peut notamment être un procédé de filage ou de fabrication de films.

Grâce à sa fluidité particulièrement bonne, le polyimide obtenu par le procédé selon l'invention est tout particulièrement adapté à des mises en forme impliquant une injection ou une extrusion en fondu.

Des articles de type étoffes imprégnées ou articles composites à fibres continues peuvent être fabriqués. Ces articles peuvent notamment être fabriqués par mise en présence d'une étoffe et des particules de polyimide obtenu par le procédé selon l'invention à l'état solide ou fondu. Les étoffes sont des surfaces textiles obtenues par assemblage de fils ou de fibres solidarisés par un procédé quelconque, tel que notamment collage, feutrage, tressage, tissage, tricotage. Ces étoffes sont aussi désignées comme des réseaux fibreux ou filamenteux, par exemple à base de fibres de verre, de fibres de carbone ou autres. Leur structure peut être aléatoire, unidirectionnelle (1 D), ou multidirectionnelle (2D, 2,5D, 3D ou autre).

Les polyimides obtenus par le procédé selon l'invention peuvent également être utilisés sous forme de particules dans des procédés de fabrication d'articles par fusion sélective de couches de poudre de polymères, notamment le prototypage rapide par frittage en phase solide à l'aide d'un laser. La fabrication par fusion sélective de couches est un procédé de fabrication d'articles consistant à déposer des couches de matériaux sous forme de poudre, à fondre de manière sélective une partie ou un domaine d'une couche, et de venir déposer une nouvelle couche de poudre et de fondre de nouveau une partie de cette couche et ainsi de suite de manière à obtenir l'objet désiré. La sélectivité de la partie de la couche à fondre est obtenue par exemple grâce à l'utilisation d'absorbeurs, d'inhibiteurs, de masques, ou à travers l'apport d'énergie focalisée, comme par exemple un rayonnement électromagnétique tel qu'un rayon laser. On préfère notamment le frittage par additivation de couches, particulièrement le prototypage rapide par frittage à l'aide d'un laser.

Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

### Exemples

### Normes de mesure

Les températures de fusion (Tf) et de cristallisation au refroidissement (Tc) des polyimides sont déterminées par calorimétrie différentielle à balayage (DSC « Differential Scanning Calorimetry »), à l'aide d'un appareil TA-Instruments Q20, à une vitesse de 10°C/min. Les Tf et Tc des polyimides sont déterminées au sommet des pics de fusion et de cristallisation. La température de transition vitreuse (Tg) est déterminée sur le même appareil à une vitesse de 40°C/min (lorsque cela est possible, elle est déterminée à 10°C/min et spécifiée dans les exemples).

Pour la détermination de la température de fusion du sel, on considère la température de fin de l'endotherme mesurée par chauffage du sel à 10°C/min.

La viscosité réduite (ηred) en solution des polyimides est mesurée par viscosimétrie capillaire à l'aide d'un viscosimètre de type Ubbelohde de 0,4 mm de diamètre dans un bain thermostaté à 25°C. La solution de polymère pour l'analyse est à 5 g/L avec comme solvant un mélange phénol-orthodichlorobenzène (50/50 en masse). La mesure du temps d'écoulement est réalisée trois fois par échantillon.

La stœchiométrie (S) du sel sec est déterminée par dosage pH-métrique à l'aide d'un appareil Mettler Toledo T50. Le dosage est réalisé sur un volume de 40 mL d'eau contenant environ 0,5 g de sel sec auquel est ajouté 10 mL de soude à une concentration de 1 mol/L. La solution titrante utilisée est une solution d'acide chlorhydrique à 1 mol/L. Le dosage du résidu de soude caractérisé par le premier volume équivalent (V1) permet d'accéder à la quantité d'acide pyromellitique (PMA) par un dosage en retour. La différence des volumes équivalents (V2-V1) permet de mesurer la quantité de Jeffamine^{®} 150 (J150) par dosage direct. Le dosage est réalisé sur trois prises d'échantillon. La stœchiométrie S du sel est ainsi définie par le rapport molaire entre le nombre de moles de tétra-acide et le nombre de moles de diamine. Après addition du limiteur de chaîne acide, un nouveau rapport stœchiométrique, S', est défini tel que S' est égal au rapport molaire entre la somme des nombres de moles de tétra-acide et de limiteur de chaînes acide, et le nombre de moles de diamine. La précision de la mesure sur les rapports stœchiométriques est de +/- 0,006. Lorsqu'aucun limiteur de chaînes n'est ajouté, S=S'

### Exemple 1 : Préparation d'un sel J150PMA synthétisé dans l'éthanol pur

### (a) Préparation du sel

Dans un réacteur de 1 L sont introduits 85,59 g (0,33 mol) d'acide pyromellitique (PMA) à 96% (Sigma-Aldrich) et 800 mL d'éthanol pur. Le milieu réactionnel est agité à température ambiante sous léger balayage d'azote. 50,82 g (0,34 mol) de Jeffamine^{®} 150 (J150) à 97% (Huntsman) sont solubilisés dans 200 mL d'éthanol pur à température ambiante. Cette solution est ensuite placée dans une ampoule de coulée raccordée au réacteur 1 L et ajoutée goutte-à-goutte en 90 minutes à la solution éthanolique d'acide pyromellitique. Le contact entre la diamine et l'acide pyromellitique engendre la formation d'un sel qui précipite immédiatement sous agitation vigoureuse. Le milieu réactionnel est maintenu sous agitation vigoureuse pendant 2 h à température ambiante et sous azote.

### (b) Séchage du sel obtenu

La poudre de sel est récupérée par filtration sous vide sur un frité, puis désagrégée et séchée sous vide à 80°C pendant une nuit. Le rendement massique est de 97,8%. La poudre est blanche et fine. Le rapport stœchiométrique S du sel ainsi obtenu est mesuré, par méthode pH-métrique décrite ci-dessus, à 1,012.

### Exemple 1A (comparatif) : Préparation d'un polyimide PI J150PMA sans ajout de limiteur de chaînes

### (c) Broyage du sel solide sec obtenu à l'issue de l'étape (b) de l'exemple 1

Une masse de 8,9 g de sel sec J150PMA obtenu à l'issue de l'étape (b) de l'exemple 1 est broyé finement dans un mortier sans ajout de limiteur de chaîne.

### (d) Polymérisation à l'état solide du sel solide sec en l'absence du limiteur de chaîne

Une masse de 8,9 g de sel issu de l'étape (c) est placé dans un réacteur tube de verre avec agitation mécanique et inertage à l'azote. La pression est égale à la pression atmosphérique. Le dispositif est chauffé à 220°C sous agitation pendant 3 h. La poudre de PI J150PMA obtenue est blanche, parfaitement sèche. La température de fusion mesurée par DSC est de 301°C, sa température de cristallisation est mesurée à 273°C, sa température de transition vitreuse, déterminée à 10°C/min, est évaluée à 113°C et sa viscosité réduite est de 101,9 mL/g.

### Exemple 1B (invention) : Préparation d'un polyimide PI J150PMA avec ajout de limiteur de chaînes (acide pyromellitique, PMA) tel que S'=1,050

### (c) Ajout du limiteur de chaîne au sel solide sec obtenu à l'issue de l'étape (b) de l'exemple 1

Une masse de 0,25 g d'acide pyromellitique (PMA) est ajoutée à 10,001g de sel sec J150PMA obtenu à l'issue de l'étape (b) de l'exemple 1. Le mélange des 2 poudres est broyé finement dans un mortier. La stœchiométrie S' théorique du sel ainsi préparé est égale à 1,050.

### (d) Polymérisation à l'état solide du sel solide sec obtenu à l'issue de l'étape (c)

Le sel issu de l'étape (c) est placé dans un réacteur tube de verre avec agitation mécanique et inertage à l'azote. La pression est égale à la pression atmosphérique. Le dispositif est chauffé à 220°C sous agitation pendant 3 h. La poudre de PI J150PMA obtenue est blanche, parfaitement sèche. La température de fusion mesurée par DSC est de 299°C, sa température de cristallisation est mesurée à 270°C, sa température de transition vitreuse, déterminée à 10°C/min, est évaluée à 110°C et sa viscosité réduite est de 49,1 mL/g.

### Exemple 1C (invention) : Préparation d'un polyimide PI J150PMA avec ajout de limiteur de chaînes (acide phtalique, PHTA) tel que S'=1,049

### (c) Ajout du limiteur de chaîne au sel solide sec obtenu à l'issue de l'étape (b) de l'exemple 1

Une masse de 0,154 g d'acide phtalique (PHTA) à 99% (Aldrich) est ajoutée à 10,005 g de sel sec J150PMA obtenu à l'issue de l'étape (b) de l'exemple 1. Le mélange des 2 poudres est broyé finement dans un mortier. La stœchiométrie S' théorique du sel ainsi préparé est égale à 1,049.

### (d) Polymérisation à l'état solide du sel solide sec obtenu à l'issue de l'étape (c)

Le sel issu de l'étape (c) est placé dans un réacteur tube de verre avec agitation mécanique et inertage à l'azote. La pression est égale à la pression atmosphérique. Le dispositif est chauffé à 220°C sous agitation pendant 3 h. La poudre de PI J150PMA obtenue est blanche, parfaitement sèche. La température de fusion mesurée par DSC est de 298°C, sa température de cristallisation est mesurée à 262°C, sa température de transition vitreuse, déterminée à 10°C/min, est évaluée à 96°C et sa viscosité réduite est de 48,0 mL/g.

### Exemple 2 (comparatif) : Préparation d'un polyimide PI J150PMA par polymérisation à l'état solide d'un sel tel que S=1,038, sans ajout de limiteur de chaînes

### (a) Préparation du sel

Dans un réacteur de 1L sont introduits 27,04 g (0,107 mol) d'acide pyromellitique (PMA) à 96% (Sigma-Aldrich) et 800 mL d'éthanol pur. Le milieu réactionnel est agité à température ambiante sous léger balayage d'azote. 15,43g (0,104 mol) de Jeffamine^{®} 150 (J150) à 97% (Huntsman) sont solubilisés dans 200 mL d'éthanol pur à température ambiante. Cette solution est ensuite placée dans une ampoule de coulée raccordée au réacteur 1L et ajoutée goutte-à-goutte en 90 minutes à la solution éthanolique d'acide pyromellitique. Le contact entre la diamine et l'acide pyromellitique engendre la formation d'un sel qui précipite immédiatement sous agitation vigoureuse. Le milieu réactionnel est maintenu sous agitation vigoureuse pendant 2 h à température ambiante et sous azote.

### (b) Séchage du sel obtenu

La poudre de sel est récupérée par évaporation du solvant à l'aide d'un évaporateur rotatif à 79°C sous balayage d'azote à pression atmosphérique. La masse de sel sec récupéré est de 40,6 g soit un rendement massique de 97,2%. La poudre est blanche et fine. Le rapport stœchiométrique S du sel ainsi obtenu est mesuré, par méthode pH-métrique décrite ci-dessus, à 1,038.

### (c) Broyage du sel solide sec

Une masse de 10 g de sel sec J150PMA obtenu à l'issue de l'étape (b) est broyé finement dans un mortier sans ajout de limiteur de chaîne.

### (d) Polymérisation à l'état solide du sel solide sec obtenu à l'issue de l'étape (c)

Le sel issu de l'étape (c) est placé dans un réacteur tube de verre avec agitation mécanique et inertage à l'azote. La pression est égale à la pression atmosphérique. Le dispositif est chauffé à 220°C sous agitation pendant 3 h. La poudre de PI J150PMA obtenue est blanche, parfaitement sèche. La température de fusion mesurée par DSC est de 300°C, sa température de cristallisation est mesurée à 262°C, sa température de transition vitreuse, déterminée à 10°C/min, est évaluée à 111°C et sa viscosité réduite est de 60,1 mL/g.

### Exemple 3 (comparatif) : Préparation d'un polyimide PI J150PMA avec ajout de limiteur (octylamine, MA8) tel que S'=0,916

### (a) Préparation du sel

Dans un réacteur de 1L sont introduits 65,02 g (0,256 mol) d'acide pyromellitique (PMA) à 96% (Sigma-Aldrich) et 800 mL d'éthanol pur. Le milieu réactionnel est agité à température ambiante sous léger balayage d'azote. 38,45 g (0,252 mol) de Jeffamine^{®} 150 (J150) à 97% (Huntsman) sont solubilisés dans 200 mL d'éthanol pur à température ambiante. Cette solution est ensuite placée dans une ampoule de coulée raccordée au réacteur 1L et ajoutée goutte-à-goutte en 90 minutes à la solution éthanolique d'acide pyromellitique. Le contact entre la diamine et l'acide pyromellitique engendre la formation d'un sel qui précipite immédiatement sous agitation vigoureuse. Le milieu réactionnel est maintenu sous agitation vigoureuse pendant 2h à température ambiante et sous azote.

### (b) Lavage et séchage du sel obtenu

La poudre de sel est récupérée par filtration sous vide sur un frité puis lavée à reflux d'éthanol (1,2 L) sous agitation pendant 3 heures. La poudre de sel lavée est filtrée à nouveau sous vide sur un frité, puis désagrégée et séchée sous vide à 80°C pendant une nuit. Le rendement massique est de 97%. La poudre est blanche et fine. Le rapport stœchiométrique S du sel ainsi obtenu est mesuré, par méthode pH-métrique décrite ci-dessus, à 1,008.

### (c) Ajout du limiteur de chaîne au sel solide sec obtenu à l'issue de l'étape (b)

Une masse de 0,413 g d'octylamine (MA8) à 99% (Aldrich) est ajoutée à 12 g de sel sec J150PMA obtenu à l'issue de l'étape (b). Le mélange de la poudre de sel et de l'octylamine est broyé finement dans un mortier. La stœchiométrie S' du sel ainsi préparé est égale à 0,916.

### (d) Polymérisation à l'état solide du sel solide sec obtenu à l'issue de l'étape (c)

Le sel issu de l'étape (c) est placé dans un réacteur tube de verre avec agitation mécanique et inertage à l'azote. La pression est égale à la pression atmosphérique. Le dispositif est chauffé à 220°C sous agitation pendant 3 h. La poudre de PI J150PMA obtenue est blanche, parfaitement sèche. La température de fusion mesurée par DSC est de 300°C, sa température de cristallisation est mesurée à 268°C, sa température de transition vitreuse, déterminée à 10°C/min, est évaluée à 108°C et sa viscosité réduite est de 170,8 mL/g.

L'ensemble des résultats obtenus dans les exemples ci-avant sont rassemblés dans le tableau 1 ci-dessous :

**Tableau 1**

| Exemple | Limiteur de chaînes introduit à l'étape (c) | S' | Viscosité réduite (mL/g) | Tf (°C) | Tc (°C) | Tg (°C) |
|---|---|---|---|---|---|---|
| 1A | - | 1,012 | 101,9 | 301 | 273 | 113 |
| 1B | PMA | 1,050 | 49,1 | 299 | 270 | 110 |
| 1C | PHTA | 1,049 | 48 | 298 | 262 | 96 |
| 2 | - | 1,038 | 60,1 | 300 | 262 | 111 |
| 3 | MA8 | 0,916 | 170,8 | 300 | 268 | 108 |

L'exemple 3 montre que le procédé employé pour la fabrication de polyimides, utilisant l'octylamine (une monoamine) en tant que limiteur de chaînes, n'est pas satisfaisant. En effet, le polyimide obtenu présente une viscosité réduite de 170,8 mL/g, soit bien au-dessus de la valeur de 101,9 mL/g obtenue pour le polyimide fabriqué selon un procédé divulgué dans l'exemple comparatif 1A. Cet exemple 3 prouve le fait que l'octylamine n'a pas joué le rôle de limiteur de chaînes comme attendu.

Les exemples 1B et 1C démontrent tout d'abord l'efficacité du procédé selon l'invention car un polyimide présentant une viscosité satisfaisante a été obtenu dans chaque cas.

Ils démontrent en outre le fait qu'aussi bien l'acide pyromellitique (exemple 1B) que l'acide phtalique (exemple 1C), introduits respectivement lors de l'étape (c) du procédé selon l'invention, ont permis de contrôler de manière particulièrement satisfaisante la longueur de chaînes du polyimide obtenu. En effet, les polyimides obtenus présentent respectivement une viscosité réduite de 49,1 mL/g (exemple 1B) et de 48 mL/g (exemple 1C). Ces valeurs sont très inférieures à la valeur de 101,9 mL/g obtenue pour le polyimide fabriqué dans le cadre de l'exemple 1A, et inférieure à la valeur de 60,1 mL/g obtenue dans le cadre de l'exemple 2.

## Revendications

1. Procédé de fabrication de polyimides aromatiques, **caractérisé en ce qu'**il comprend les étapes suivantes :
(a) préparation d'un ou plusieurs sel(s) solide(s) en faisant réagir un ou plusieurs acide(s) tétracarboxylique(s) aromatique(s) et une ou plusieurs diamine(s) selon un rapport molaire allant de 0,95 à 1,05 ;
(b) séchage du ou des sel(s) solide(s) ;
(c) ajout au sel sec issu de l'étape (b) d'un ou plusieurs composé(s) (C);
(d) polymérisation à l'état solide du ou desdits sel(s) solide(s) en présence du ou des composé(s) (C) ;
**caractérisé en ce que** les composé(s) (C) sont choisis parmi l'acide pyromellitique, l'acide phtalique et leurs mélanges.

2. Procédé selon la revendication 1, **caractérisé en ce que** le ou les sel(s) solide(s) sont préparés en faisant réagir un ou plusieurs acide(s) tétracarboxylique(s) aromatique(s) et une ou plusieurs diamine(s) selon un rapport molaire allant de 0,99 à 1,01.

3. Procédé selon la revendication 1, **caractérisé en ce que** le ou les sel(s) solide(s) sont préparés en faisant réagir en quantité stœchiométrique un ou plusieurs acide(s) tétracarboxylique(s) aromatique(s) et une ou plusieurs diamine(s).

4. Procédé selon l'une des revendications précédentes, **caractérisé en ce que** le ou lesdits acide(s) tétracarboxylique(s) aromatique(s) employés à l'étape (a) sont choisis parmi l'acide pyromellitique, l'acide 3,3',4,4'-biphényltétracarboxylique, l'acide 2,3,3',4'- biphényltétracarboxylique, l'acide 2,2',3,3'-biphényltétracarboxylique, l'acide 3,3',4,4'-benzophénonetétracarboxylique, l'acide 2,2',3,3'-benzophénonetétracarboxylique, l'acide 1,2,5,6-naphthalènetétracarboxylique, l'acide 2,3,6,7-naphthalènetétracarboxylique, l'acide 2,3,5,6-pyridinetétracarboxylique, l'acide 3,4,9, 10-perylènetétracarboxylique, l'acide 3,3',4,4'-tétraphénylsilanetétracarboxylique, et l'acide 2,2'-bis-(3,4-bicarboxyphenyl) hexafluoropropane tétracarboxylique.

5. Procédé selon l'une des revendications précédentes, **caractérisé en ce que** la ou les diamine(s) sont des molécules de formule H₂N-R-NH₂ avec un radical R divalent hydrocarboné aliphatique, saturé ou insaturé, linéaire ou branché, cycloaliphatique ou aromatique, comprenant éventuellement un ou plusieurs hétéroatomes.

6. Procédé selon la revendication 5, **caractérisé en ce que** le radical R comprend de 2 à 50 atomes de carbone, et éventuellement un ou plusieurs hétéroatomes.

7. Procédé selon l'une des revendications précédentes, **caractérisé en ce que** la ou les diamine(s) sont choisies parmi les diamines aliphatique(s), et de préférence parmi le 1,2-diaminoéthane, le 1,3-diaminopropane, le 1,4-diaminobutane, le 1,5-diaminopentane, le 2-méthyl-1,5-diaminopentane, l'hexaméthylène diamine, la 3-méthyl-hexaméthylène diamine, la 2,5-diméthyl-hexaméthylène diamine, la 2,2,4- et 2,4,4-triméthyl-hexaméthylène diamine, le 1,7-diaminoheptane, le 1,8-diaminooctane, la 2,2,7,7-tétraméthyl-octaméthylène diamine, le 1,9-diaminonane, la 5-méthyl-1,9-diaminononane, le 1,10-diaminodécane, le 1,11-diaminoundécane, le 1,12-diaminododécane, le 1,13-diaminotridécane, et le 1,14-diaminotétradécane.

8. Procédé selon l'une des revendications 1 à 6, **caractérisé en ce que** la ou les diamine(s) sont choisies parmi les diamines cycloaliphatiques, et de préférence parmi l'isophorone diamine, le 1,3-diaminocyclohexane, le 1,4-diaminocyclohexane, le diaminodicyclohexyl-méthane, le 1,3-bis(aminométhyle)cyclohexane, la 4,4'-méthylènebis(cyclohexylamine) et la 4,4'-methylènebis(2-methylcyclohexylamine).

9. Procédé selon l'une des revendications 1 à 6, **caractérisé en ce que** la ou les diamine(s) sont choisies parmi les diamines aromatiques, et de préférence parmi la m-phénylènediamine, la p-phénylènediamine, le 3,4'-diaminodiphényléther, le 4,4'-diaminodiphényléther, la m-xylylènediamine et la p-xylylènediamine.

10. Procédé selon l'une des revendications précédentes, **caractérisé en ce que** la quantité en composé (C) introduit à l'étape (c) est supérieure à 0,5% en nombre de moles par rapport au nombre total de moles d'acide tétracarboxylique aromatique et de diamine employés à l'étape (a), plus préférentiellement allant de 0,5 à 10% en nombre de moles, encore plus préférentiellement de 1 à 5% en nombre de moles.

11. Procédé selon l'une des revendications précédentes, **caractérisé en ce que**, lors de l'étape (d), la polymérisation est effectuée à une température T obéissant à la relation suivante : Tf du sel de l'étape (a) > T > Tg du polyimide à obtenir.

12. Procédé selon l'une des revendications précédentes, **caractérisé en ce que**, lors de l'étape (d), la polymérisation est effectuée à une pression absolue allant de 0,005 à 1 MPa.

13. Procédé selon l'une des revendications précédentes, **caractérisé en ce que**, lors de l'étape (d), la polymérisation est effectuée à une température allant de 50°C à 250°C.

## Patentansprüche

1. Verfahren zur Herstellung von aromatischen Polyimiden, **dadurch gekennzeichnet, dass** es die folgenden Schritte umfasst:
(a) Herstellung von einem oder mehreren festen Salzen durch Umsetzen von einer oder mehreren aromatischen Tetracarbonsäuren und einem oder mehreren Diaminen in einem Molverhältnis im Bereich von 0,95 bis 1,05;
(b) Trocknung des festen Salzes bzw. der festen Salze;
(c) Zugabe von einer oder mehreren Verbindungen (C) zu dem trockenen Salz aus Schritt (b);
(d) Festphasenpolymerisation des festen Salzes bzw. der festen Salze in Gegenwart der Verbindung bzw. der Verbindungen (C);
**dadurch gekennzeichnet, dass** man die Verbindung bzw. die Verbindungen (C) aus Pyromellitsäure, Phthalsäure und Mischungen davon auswählt.

2. Verfahren nach Anspruch 1, **dadurch gekennzeichnet, dass** man das feste Salz bzw. die festen Salze durch Umsetzen von einer oder mehreren aromatischen Tetracarbonsäuren und einem oder mehreren Diaminen in einem Molverhältnis im Bereich von 0,99 bis 1,01 herstellt.

3. Verfahren nach Anspruch 1, **dadurch gekennzeichnet, dass** man das feste Salz bzw. die festen Salze durch Umsetzen einer stöchiometrischen Menge von einer oder mehreren aromatischen Tetracarbonsäuren und einem oder mehreren Diaminen herstellt.

4. Verfahren nach einem der vorhergehenden Ansprüche, **dadurch gekennzeichnet, dass** man die in Schritt (a) eingesetzte aromatische Tetracarbonsäure bzw. die in Schritt (a) eingesetzten aromatischen Tetracarbonsäuren aus Pyromellitsäure, 3,3',4,4'-Biphenyltetracarbonsäure, 2,3,3',4'-Biphenyltetracarbonsäure, 2,2',3,3'-Biphenyltetracarbonsäure, 3,3',4,4'-Benzophenontetracarbonsäure, 2,2',3,3'-Benzophenontetracarbonsäure, 1,2,5,6-Naphthalintetracarbonsäure, 2,3,6,7-Naphthalintetracarbonsäure, 2,3,5,6-Pyridintetracarbonsäure, 3,4,9,10-Perylentetracarbonsäure, 3,3',4,4'-Tetraphenylsilantetracarbonsäure und 2,2'-Bis(3,4-bicarboxyphenyl)-hexafluorpropantetracarbonsäure auswählt.

5. Verfahren nach einem der vorhergehenden Ansprüche, **dadurch gekennzeichnet, dass** es sich bei dem Diamin bzw. den Diaminen um Moleküle der Formel H₂N-R-NH₂ mit einem linearen oder verzweigten, gesättigten oder ungesättigten aliphatischen, cycloaliphatischen oder aromatischen Rest R, der gegebenenfalls ein oder mehrere Heteroatome umfasst, handelt.

6. Verfahren nach Anspruch 5, **dadurch gekennzeichnet, dass** der Rest R 2 bis 50 Kohlenstoffatome und gegebenenfalls ein oder mehrere Heteroatome umfasst.

7. Verfahren nach einem der vorhergehenden Ansprüche, **dadurch gekennzeichnet, dass** man das Diamin bzw. die Diamine aus aliphatischen Diaminen und vorzugsweise aus 1,2-Diaminoethan, 1,3-Diaminopropan, 1,4-Diaminobutan, 1,5-Diaminopentan, 2-Methyl-1,5-diaminopentan, Hexamethylendiamin, 3-Methylhexamethylendiamin, 2,5-Dimethylhexamethylendiamin, 2,2,4- und 2,4,4-Trimethylhexamethylendiamin, 1,7-Diaminoheptan, 1,8-Diaminooctan, 2,2,7,7-Tetramethyloctamethylendiamin, 1,9-Diaminononan, 5-Methyl-1,9-diaminononan, 1,10-Diaminodecan, 1,11-Diaminoundecan, 1,12-Diaminododecan, 1,13-Diaminotridecan und 1,14-Diaminotetradecan auswählt.

8. Verfahren nach einem der Ansprüche 1 bis 6, **dadurch gekennzeichnet, dass** man das Diamin bzw. die Diamine aus cycloaliphatischen Diaminen und vorzugsweise aus Isophorondiamin, 1,3-Diaminocyclohexan, 1,4-Diaminocyclohexan, Diaminodicyclohexylmethan, 1,3-Bis(aminomethyl)cyclohexan, 4,4'-Methylenbis(cyclohexylamin) und 4,4'-Methylenbis(2-methylcyclohexylamin) auswählt.

9. Verfahren nach einem der Ansprüche 1 bis 6, **dadurch gekennzeichnet, dass** man das Diamin bzw. die Diamine aus aromatischen Diaminen und vorzugsweise aus m-Phenylendiamin, p-Phenylendiamin, 3,4'-Diaminodiphenylether, 4,4'-Diaminodiphenylether, m-Xylylendiamin und p-Xylylendiamin auswählt.

10. Verfahren nach einem der vorhergehenden Ansprüche, **dadurch gekennzeichnet, dass** die in Schritt (c) eingetragene Menge an Verbindung (C) größer als 0,5 % als Molzahl, bezogen auf die Gesamtmolzahl von aromatischer Tetracarbonsäure und Diamin, die in Schritt (a) eingesetzt werden, ist und weiter bevorzugt im Bereich von 0,5 bis 10 % als Molzahl, noch weiter bevorzugt 1 bis 5 % als Molzahl, liegt.

11. Verfahren nach einem der vorhergehenden Ansprüche, **dadurch gekennzeichnet, dass** in Schritt (d) die Polymerisation bei einer Temperatur T durchgeführt wird, die der folgenden Beziehung gehorcht: Tf des Salzes aus Schritt (a) > T > Tg des zu erhaltenden Polyimids.

12. Verfahren nach einem der vorhergehenden Ansprüche, **dadurch gekennzeichnet, dass** in Schritt (d) die Polymerisation bei einem Absolutdruck im Bereich von 0,005 bis 1 MPa durchgeführt wird.

13. Verfahren nach einem der vorhergehenden Ansprüche, **dadurch gekennzeichnet, dass** in Schritt (d) die Polymerisation bei dem Temperaturbereich von 50 °C bis 250 °C durchgeführt wird.

## Claims

1. Process for manufacturing aromatic polyimides, **characterized in that** it comprises the following steps:
(a) preparing one or more solid salts by reacting one or more aromatic tetracarboxylic acids and one or more diamines in a mole ratio ranging from 0.95 to 1.05;
(b) drying the solid salt(s);
(c) adding to the dry salt derived from step (b) one or more compounds (C);
(d) solid-state polymerization of said solid salt(s) in the presence of the compound(s) (C);
**characterized in that** the compound(s) (C) are chosen from pyromellitic acid, phthalic acid and mixtures thereof.

2. Process according to Claim 1, **characterized in that** the solid salt(s) are prepared by reacting one or more aromatic tetracarboxylic acids and one or more diamines in a mole ratio ranging from 0.99 to 1.01.

3. Process according to Claim 1, **characterized in that** the solid salt(s) are prepared by reacting in stoichiometric amount one or more aromatic tetracarboxylic acids and one or more diamines.

4. Process according to one of the preceding claims, **characterized in that** said aromatic tetracarboxylic acid(s) used in step (a) are chosen from pyromellitic acid, 3,3',4,4'-biphenyltetracarboxylic acid, 2,3,3',4'-biphenyltetracarboxylic acid, 2,2',3,3'-biphenyltetracarboxylic acid, 3,3',4,4'-benzophenonetetracarboxylic acid, 2,2',3,3'-benzophenonetetracarboxylic acid, 1,2,5,6-naphthalenetetracarboxylic acid, 2,3,6,7-naphthalenetetracarboxylic acid, 2,3,5,6-pyridinetetracarboxylic acid, 3,4,9,10-perylenetetracarboxylic acid, 3,3',4,4'-tetraphenylsilanetetracarboxylic acid, and 2,2'-bis(3,4-bicarboxyphenyl)hexafluoropropanetetracarboxylic acid.

5. Process according to one of the preceding claims, **characterized in that** the diamine(s) are molecules of formula H₂N-R-NH₂ with a linear or branched, saturated or unsaturated aliphatic, cycloaliphatic or aromatic divalent hydrocarbon-based radical R, optionally comprising one or more heteroatoms.

6. Process according to Claim 5, **characterized in that** the radical R comprises from 2 to 50 carbon atoms, and optionally one or more heteroatoms.

7. Process according to one of the preceding claims, **characterized in that** the diamine(s) are chosen from aliphatic diamines, and preferably from 1,2-diaminoethane, 1,3-diaminopropane, 1,4-diaminobutane, 1,5-diaminopentane, 2-methyl-1,5-diaminopentane, hexamethylenediamine, 3-methylhexamethylenediamine, 2,5-dimethylhexamethylenediamine, 2,2,4- and 2,4,4-trimethylhexamethylenediamine, 1,7-diaminoheptane, 1,8-diaminooctane, 2,2,7,7-tetramethyloctamethylenediamine, 1,9-diaminononane, 5-methyl-1,9-diaminononane, 1,10-diaminodecane, 1,11-diaminoundecane, 1,12-diaminododecane, 1,13-diaminotridecane, and 1,14-diaminotetradecane.

8. Process according to one of Claims 1 to 6, **characterized in that** the diamine(s) are chosen from cycloaliphatic diamines, and preferably from isophorone diamine, 1,3-diaminocyclohexane, 1,4-diaminocyclohexane, diaminodicyclohexylmethane, 1,3-bis(aminomethyl)cyclohexane, 4,4'-methylenebis(cyclohexylamine) and 4,4'-methylenebis(2-methylcyclohexylamine).

9. Process according to one of Claims 1 to 6, **characterized in that** the diamine(s) are chosen from aromatic diamines, and preferably from m-phenylenediamine, p-phenylenediamine, 3,4'-diaminodiphenyl ether, 4,4'-diaminodiphenyl ether, m-xylylenediamine and p-xylylenediamine.

10. Process according to one of the preceding claims, **characterized in that** the amount of compound (C) introduced into step (c) is greater than 0.5% as number of moles relative to the total number of moles of aromatic tetracarboxylic acid and of diamine used in step (a), more preferentially ranging from 0.5% to 10% as number of moles, even more preferentially from 1% to 5% as number of moles.

11. Process according to one of the preceding claims, **characterized in that**, during step (d), the polymerization is performed at a temperature T which obeys the following relationship: Tf of the salt from step (a) > T > Tg of the polyimide to be obtained.

12. Process according to one of the preceding claims, **characterized in that**, during step (d), the polymerization is performed at an absolute pressure ranging from 0.005 to 1 MPa.

13. Process according to one of the preceding claims, **characterized in that**, during step (d), the polymerization is performed at a temperature ranging from 50°C to 250°C.
